(19)

**Europäisches Patentamt**
**European Patent Office**
**Office européen des brevets**

(11) **EP 4 564 233 A1**

(12) **EUROPEAN PATENT APPLICATION**

(43) Date of publication:
**04.06.2025 Bulletin 2025/23**

(21) Application number: **24216582.7**

(22) Date of filing: **29.11.2024**

(51) International Patent Classification (IPC):
**G06N 3/126** (2023.01)    **G06N 20/00** (2019.01)
**G06F 9/48** (2006.01)    **G06F 17/11** (2006.01)

(52) Cooperative Patent Classification (CPC):
**G06N 3/126; G06F 9/4856; G06F 17/11;**
**G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.11.2023 EP 23213152**

(71) Applicant: **msg Life Central Europe GmbH**
**80687 München (DE)**

(72) Inventor: **Helmert, Axel**
**1040 Wien (AT)**

(74) Representative: **Patentanwälte Bauer Vorberg Kayser**
**Partnerschaft mbB**
**Goltsteinstraße 87**
**50968 Köln (DE)**

(54) **SYSTEM AND METHOD FOR MIGRATING A STARTING COMPUTATION SYSTEM TO A TARGET COMPUTATION SYSTEM**

(57)    A system (10) for migrating a starting computation system (1) to a target computation system (3) is disclosed. After migration (2), the target computation system (3) replicates a behaviour of the starting computation system (1), wherein the behaviour of the starting computation system (1) is represented by a plurality of input output vector pairs (8), each of the input output vector pairs (8) comprising an input vector (6) and an output vector (7) being generated by the starting computation system (1) in reaction to the input vector (6) of the same pair (8). The system (10) comprises an input output vector interface (11), a matching unit (12) and an implementation unit (13). The input output vector interface (11) is configured to receive a plurality of input output vector pairs (8). The matching unit (12) is communicatively coupled to the input output vector interface (11), thus being able to receive a plurality of input output vector pairs (8) via the input output vector interface (11). Additionally, the matching unit (12) is configured to determine a parametrised subset of building blocks (16) by matching the parametrised subset of building blocks (16) with the received input output vectors (8). Various ways of this kind of matching are disclosed. The implementation unit (13) is communicatively coupled with the matching unit (12) to receive the parametrised subset of building blocks (16), wherein the implementation unit (13) is configured to implement the target computation system (3) based on the parametrised subset of building blocks (16).

Fig. 2

**Description**

The present disclosure refers to a system and a method for migrating a starting computation system to a target computation system, wherein, after migration, the target computation system replicates a behaviour of the starting computation system.

Computation systems to simulate various processes are known from a wide variety of fields. For example, it is known to use computer simulations of chemical, physical and engineering processes. Such computer simulations are implemented in software. By setting various input variables and boundary conditions, usually corresponding to settings, user control input or boundary conditions of the corresponding physical, chemical or technical process, output variables may be computed which describe the expected outcome of the process in question in real life.

In this way, a wide variety of processes, including experiments, may be simulated to arrive at results which may reflect real outcomes at least to some extent. Depending on the complexity of the process to be simulated, the computation system can be rather complex and extensive.

At some point in time, the need arises to migrate those computation system from its legacy computer system to a new computer system. This process may be described as migrating the starting computation system to a target computation system. Such a migration provides an opportunity to refactor the software code, which at this point may have been unwieldy, difficult to understand and which may rely on features of the legacy system, e.g. the operating system of the legacy computer system, which are no longer available or at least no longer available in their old form on the new computer system.

The programming language used at the computation system to be migrated can form another issue to consider. There are still computation systems in operation that use outdated programming languages, like FORTRAN or COBOL. Experts who can write or update program code in such a programming language are hard to find. Also, the new hardware or operating system migrated to may not support the programming language used for the computation system to be migrated. Even if such support exists, using a different programming language or a new programming paradigm may be advantageous for reasons of software engineering or maintainability of the software code or for speeding up the execution of the computer simulation on the new platform. Such a migration to a new computer system presents a suitable opportunity to, on the one hand, refactor the software code and also to compartmentalize functions. The legacy computer simulation (i.e., the computation system to be migrated) provides a reference point for a "correct" simulation but may not be structured in a clear and easily understandable way. On the other hand, without the benefit of a clear structure in the code of the computation system to be migrated, any software migration or refactoring is an extremely time-consuming process, especially if it is to be ensured that the migrated and refactored system is to produce identical results to those of the legacy system.

If the source code of the starting computation system is still available, the source code can be reprogrammed by programmers who analyse the existing source code and transform it to new source code in a current programming language and for current computer systems. However, these migration projects sometimes involve many dozens of man-years so that the migration is expensive and time consuming. If the starting computation system is written in an outdated programming language, the costs and time needed might even increase, as the number of experts suitable for those projects is limited.

According to some approaches of the art, the behaviour of the starting computation system is analysed and transformed into a target computation system in an automated manner. This accelerates migration and reduces the migration costs considerably. One of these approaches is disclosed in post-published EP 4 283 512 A1. At this approach, the behaviour of a starting computation model is modelled with several sub-models. One of the sub-models comprises a neural network which is trained by machine learning based on a plurality of vector training data generated by the starting computation model. The combination of the different sub-models provides the same or at least sufficiently similar behaviour as the starting computation model.

Even though this approach has proven to be very powerful, training of the neural network needs a huge amount of training data sets and quite some calculation time. Particularly for starting computation systems where a limited number of training data sets (e.g. just a couple of hundreds or a couple of thousands) is available, this approach may lead to migrated systems that reflect the behaviour of original system less precisely than intended or needed.

It is an objective of the present disclosure to provide a system and a method that support migration of a starting computation system to a target computation system in a time efficient way, even if the starting computation system is extensive, its source code is not available and/or the amount of training data sets is limited.

These and other objectives are met by a system and a method according to the independent claims. Further embodiments can be obtained from the dependent claims and the following description.

It should be noted that the usage of "and/or" between two features should be understood as a generic expression for one of three different embodiments: A first embodiment which contains the first feature, a second embodiment which contains the second feature, and a third embodiment which contains the first and second features.

It has been recognised that very often a starting computation system is not a "black box" whose behaviour is completely unknown and undeterminable. Most computation systems to be migrated follow specific rules, i.e. there is a logical and reproduceable link between an input vector and a corresponding output vector of the computation systems to be migrated. Particularly at huge and extensive computation systems, this link might be complex and hard to determine. Non-linear and/or discontinuous functions, such as rounding, maximum or minimum, can lead to even more complicated recovery of the link. However, the link still exists. Therefore, these starting computation systems are rather a "white box" than a "black box", even if the knowledge about the behaviour of the starting computation system might be limited. The link between the input and the output of the starting computation system is quite similar to a technical, physical or chemical process, where a process influences measurement values and the link between the measurement values has to be recovered.

The present disclosure uses this basic concept to support migration of the starting computation system to a target computation system, wherein, after migration, the target computation system replicates the behaviour of the starting computation system. The present disclosure assumes that a plurality of input output vector pairs exists or can be generated and that these input output vector pairs reflect the behaviour of the starting computation system. These input output vector pairs at least comprise an input vector and an output vector, respectively, wherein the output vector is generated by the starting computation system in reaction to a corresponding input vector. I.e. an input output vector pair at least comprises an input vector and a corresponding output vector.

A vector according to the present disclosure is a structure of several or a plurality of quantities. An input vector comprises several or a plurality of input quantities, i.e. quantities that are input into the starting computation system. An output vector comprises several or a plurality of output quantities, i.e. quantities that are based on at least some of the input quantities of a corresponding input vector and that are output by the starting computation system in reaction to a corresponding input vector. The same definition is applicable for the target computation system. An input quantity and an output quantity can consist of various items and can reflect various things. Just for providing some examples, the quantities can comprise a digit, a number, a vector, a matrix, a text string, a logic value, a table, a function, etc. The quantities can reflect various things, e.g. a measurement value, a time, a status, a variable, a parameter, a setting, an age, an expected remaining lifespan, a boundary condition, a probability, etc, also just to provide some, but not limiting examples. A quantity might also include a reference to a commonly used item, i.e. an item that is present at several or multiple input or output vectors in an identical way.

It should be noted that an input vector is not necessarily input to the starting computation system and/or the target computation system in a closed form and that the output vector is not necessarily output by the starting computation system and/or the target computation system in a closed form. At least some of the input quantities will be input "from outside" the computation system and at least some of the output quantities will be output by the computation system to the "outside". However, it is possible that one or several of the input quantities are stored at the computation system and/or a connected storage and are not input individually each time a new calculation of the computation system is triggered. E.g., such quantities might include constants that are used for several or multiple calculations. Similarly, not all output quantities have to be output by the computation system. Some of the output quantities may also be used internally at the computation system. It should additionally be noted that the input quantities and output quantities can be generated at different points in time and/or can change over time. In these cases, the input vector and the corresponding output vector can refer to a combination of all relevant and related input and output quantities at a specific time.

The disclosed system, which supports migration of a starting computation system to a target computation system, at least comprises an input output vector interface, a matching unit, and an implementation unit.

The input output vector interface can be used for inputting input output vector pairs into the system of the present disclosure. This purpose can be achieved in various ways, as long as the input output interface is able to receive each piece of information of the input vectors, each piece of information of the corresponding output vectors and their respective connection. In one embodiment, the input output vector pairs can be input to the input output vector interface in form of separate input vectors and corresponding separate output vectors. In another embodiment, the input output vector pairs can be input as combined vectors into the input output vector interface, where each combined vector at least comprises an input vector and a corresponding output vector. In another embodiment, input output vector pairs can also be input as a data set, which contains each piece of information of the input vectors and each piece of information of the output vectors and which can additionally contain further pieces of information. It is beneficial, if it is apparent, known or deducible which provided data has which meaning, e.g. which input quantity, which output quantity or which additional piece of information reflects which specific piece of data. The input output vector pairs can be input into the system according to the present disclosure via the input output vector interface while performing the migration. However, the input output vector pairs can also be stored in a storage, e.g. in a database, and the system according to the present disclosure can use the input output vector interface to access this storage. The input output vector interface can also be adapted to reorganise and/or pre-process received input output vector pairs, before making them available for other units of the disclosed system.

The matching unit is communicatively coupled to the input output vector interface so that the matching unit can receive a plurality of input output vector pairs via the input output vector interface. Based on received input output vector pairs, the matching unit generates a parametrised subset of building blocks by matching a plurality of building blocks with

EP 4 564 233 A1

the received input output vector pairs. Thus, the matching unit determines building blocks and parameter of building blocks in such a way that, when put together, the parametrised subset of building blocks describes a link between the provided input vectors and the corresponding output vectors. This can be a precise link between input vectors and corresponding output vectors, i.e. an output vector of the starting computation system is exactly the same as an output vector of the target computation system, when an identical input vector is input. However, the link may also be an approximation that provides an error measure below a predefined margin, e.g. the deviation of an output quantity of the starting computation system and the output quantity of the target computation system is less than a predefined margin, e.g. less than 10%, less than 5%, less than 1% or less than 0.1%, just to provide some possible examples of predefined margins. A deviation between output quantities of the starting computation system and of the target computation system can result from different rounding, different sequence of operations, not precisely recovered building blocks and/or parameters and/or the like. In one embodiment the parametrised subset of building blocks can be a formula or a collection of formulas describing the link between input quantities and corresponding output quantities.

In principle, the matching unit can employ various building blocks and various matching techniques for determining the parametrised subset of building blocks. As long as a matching unit is able to determine a parametrised subset of building blocks and as long as the matching unit incorporates a white box approach as outlined before, this matching unit can be used in connection with the present disclosure. The matching unit can incorporate a machine learning approach but does not use a neural network. Some possible embodiments of the matching unit will be discussed in further detail below.

The implementation unit is communicatively coupled with the matching unit and, via this connection, can receive the parametrised subset of building blocks determined by the matching unit. Based on a received parametrised subset of building blocks, the implementation unit implements the target computation system. As the present disclosure is focused on determining the parametrised subset of building blocks, the present disclosure does not describe this step in detail. There are various approaches known in the art that can be used at implementing the parametrised subset of building blocks by corresponding program code. One approach uses parsers that convert a neutral representation of the functionalities of a computation system into program code. A neutral representation describes the behaviour of a system while being independent from a used programming language. The neutral representation can be formed by the parametrised subset of building blocks itself. However, the parametrised subset of building blocks can also be transformed into a neutral representation first. Another approach is AI based and can provide a powerful implementation scheme for converting the parametrised subset of building blocks into program code. These AI based approaches can use Large Language Models (LLM) or Foundation Models (FM). Generally, it should be noted that there might be a need to provide the parametrised subset of building blocks in a special form, a special structure, with specific details, etc. depending on the incorporated implementation scheme. Generally, this task can usually be solved easily.

In this way, the system and method of the present disclosure can support migration of a starting computation system to a target computation system. As the determined parametrised subset of building blocks will reflect the link between input and output vectors of the starting computation system, the present disclosure can result in a representation of the starting computation system, which is implemented into a target computation system. In many cases and different to neural networks, the parametrised subset of building blocks can form a directly understandable representation of the starting computation system. The matching scheme can result in relatively quick determination of the parametrised subset of building blocks so that the present disclosure allows for a time-efficient migration process. Besides that, the matching scheme reveals links that, based on input output vector pairs, cannot be found by human programmers or other experts. This can be an important benefit, if the source code of the starting computation system is not available or too extensive to be analysed line by line.

As the present disclosure is based on input output vector pairs, the target computation system contains only relevant parts of the starting computation system. Each part of the starting computation system, which is not reflected in the input output vector pairs, will not be included in the target computation system. Thus, the target computation system will not include "unnecessary" content of the starting computation system and can be more efficient than the starting computation system, e.g. regarding the consumed memory, storage space and required computation resources when executed. It even turned out that the present disclosure can be used to evaluate the quality of the calculations of the starting computation system. For many starting computation systems, the system of the present disclosure can find a parametrised subset of building blocks. If this is not possible or not for all input/output quantities, this is a strong hint that the starting computation system contains implementation errors and/or does not work as intended.

The term "computation system" refers to a software system that is executed on a computer, a server, a cluster of computers, and/or similar computer systems. These computer systems generally comprise one or several processors, memory (e.g. RAM (Random Access Memory), ROM (Read Only Memory), hard drive, SSD (Solid State Disk), flash drive, etc.), input output interfaces (e.g. display, keyboard, mouse, touchpad, touchscreen, etc.) and other typical components, like a communication bus or a communication interface. The computation system is described by source code, where the source code can be translated in machine code that is executable by one or several processors. If machine code is available, the source code is not required to run the computation system. Generally, the computation system is adapted to the hardware on which the source code or the machine code is executed. Thus, the computation system can be regarded as a combination of software and hardware.

The "starting computation system" is the system to be migrated and the "target computation system" is the system which results out of the migration. In one embodiment, the starting computation system is an outdated computation system that should be migrated to a new system. After the migration, the starting computation system and the target computation system have substantially the same behaviour, i.e. the target computation system "replicates" the behaviour of the starting computation system. This means that, when inputting an input vector, the starting computation system and the target computation system will generate the same output vector or at least an output vector, whose corresponding elements differ less than a predefined margin, e.g. less than 10%, less than 5%, less than 1% or less than 0.1%, just to provide possible examples of predefined margins. As the starting computation system and the target computation system generally will run on different computers/computer systems, generally will be implemented with different source code and/or generally will use different programming schemes, the runtime behaviour etc generally will be completely different. Nevertheless, both the starting computation system and the target computation system will generate the same or at least sufficiently similar computation results.

The matching of the matching unit is based on "building blocks" provided to the matching unit. During operation, the matching unit accumulates at least some of the provided building blocks into a parametrised subset of building blocks, where the determined parametrised subset of building blocks should describe or at least approximate the link between the input vectors and the output vectors of the starting computation system. In general, a building block can be formed by everything that can describe at least part of a link between input and/or output quantities. A building block can directly describe the link between one or several input quantities and one or several output quantities. However, such a link can also be described by a combination of several building blocks. The building blocks can include constants, variables, mathematical operators (e.g. sum, multiplication, power, radical, sine, logarithm, etc.) or other similarly basic elements. However, the building blocks can also include more or less complex formulas, program code, program functions or the like. The provided building blocks can be selected based on the way the matching unit determines the parametrised subset of building blocks. Some matching schemes combine mathematical operators, constants, variables and the like to build a link between input and output quantities. Some matching schemes use basic formulas of the domain, to which the starting computation system belongs. Some matching schemes combine several approaches. It is obvious that different matching schemes may use different building blocks and/or that provided building blocks can be selected based on the used matching scheme.

Additionally, the provided building blocks can reflect knowledge about the starting computation system, i.e. the building blocks can be selected based on knowledge about the starting computation system and/or its domain. This knowledge can be well-founded information about the starting computation system. However, this knowledge can also reflect assumptions or guesses about the starting computation system. According to one embodiment, the building blocks are selected based on calculations the starting computation system is likely to perform. This does not necessarily mean that the starting computation system really performs a specific calculation. It is sufficient that there is a certain likelihood that the starting computation system performs this specific calculation. If the starting computation system simulates a chemical process, specific constants, operators, formulas and/or the like can be used as building blocks. These building blocks can be different, if the starting computation system simulates a process at a different domain, e.g. at electrical engineering, mechanical engineering or even economic processes. Even at a specific domain, the performed simulation can have an impact on the selection of building blocks. E.g. at electrical engineering, the building blocks might be different, if the starting computation system simulates the loading behaviour of an extensive capacitor arrangement, the conducting behaviour of a complex semiconductor arrangement, the behaviour of an electric vehicle or interferences in a wireless communication network. These few examples show, how knowledge about the starting computation system can have an impact on the selection of provided building blocks.

The "parametrised subset of building blocks" is generated based on the building blocks and the received plurality of input output vector pairs. A parametrised subset consists of several or a plurality of building blocks chosen from the provided building blocks. When generating a parametrised subset, some provided building blocks can occur once or several times, while other building blocks are not used at all. The term "parametrised subset of building blocks" refers to the combination of the used building blocks and their respective and/or required parameters. A parameter can define a building block in further detail. A parameter can also define an interrelation between two or more building blocks. A building block might be used on its own. However, a building block might also be used by another building block.

When determining the parametrised subset of building blocks, the matching unit can use the received plurality of input output vector pairs as training data sets. The plurality of input output vector pairs can originate from previous operations of the starting computation system. There might be a database that contains input and output quantities of many calculations of the starting computation system, e.g. during previous usages of the computation systems. However, it is also possible that the input output vector pairs are generated for the migration process or for enhancing the amount of already existing training data sets. In this case, the input vectors can be generated randomly. As the structure of input vectors that are expected by the starting computation system is generally known, generating suitable input vectors can be an easy task. In this manner, many input output vector pairs can be generated and/or added.

Further details and embodiments of the present disclosure will become apparent from the following description.

According to one embodiment, the system additionally comprises a building block storage storing multiple building blocks and being communicatively coupled with the matching unit, wherein each of the multiple building blocks describe at least part of a link between input and/or output quantities, wherein at least some of the building blocks are likely to be used at the starting computation system when generating an output vector, wherein the matching unit is configured to access at least some of the multiple building blocks in the building block storage and to determine the parametrised subset of building blocks based on building blocks loaded from the building block storage. A building block storage provides a well-defined interface for providing building blocks to the disclosed system. Thereby, the matching unit can be supported at determining the parametrised subset of building blocks.

The building block storage can be embodied in various ways. It should be capable to store the building blocks and to make them accessible for the matching unit. However, this task can be fulfilled in various ways. The building block storage can be embodied as a separate storage or as a storage area defined and/or allocated in another storage. It is beneficial if the building block storage is a non-volatile storage so that stored information can be stored without the need of refreshing or reloading. The building block storage can be embodied as a local storage or as a remote storage. If the building block storage is embodied as a remote storage, it can be beneficial to download some or all of the stored building blocks and to create a local copy of some or all of the stored building blocks.

According to one embodiment, the multiple building blocks stored in the building block storage are chosen from domain-specific knowledge for the starting computation system. As the starting computation system most likely uses domain-specific knowledge, the matching can be quicker and more precise. This domain-specific knowledge can contain formulas, constants, mathematical operators, and/or other constructs, which are typical for the domain of the starting computation system.

According to one embodiment, the matching unit incorporates a machine learning scheme, preferably a deep machine learning scheme, wherein the parametrised subset of building blocks forms a system to be trained and the matching unit is configured to add a building block to the parametrised subset of building blocks and/or adapt a building block, if it is likely to match with the received input output vectors, thus generating the parametrised subset of building blocks. In this way, the matching unit can successively generate the parametrised subset of building blocks. Such a machine learning scheme can be based on various approaches. One purpose of such a machine learning scheme can be a matching that allows for as little user interaction as possible. Ideally, a user provides the input output vector pairs and the building blocks and the matching unit generates the parametrised subset of building blocks independently and without user interaction. Possible implementations of such machine learning schemes may be based on genetic programming, symbolic regression and - to a certain extend - multiple linear regression. Those examples will be discussed in further details later. Other implementations may be based on neuro-symbolic AI, which combines the strengths of neural networks and symbolic reasoning and aims for the capability of a human-like understanding.

According to one embodiment, the matching unit is based on statistical and/or iterative and/or recursive and/or optimisation concepts. Statistical concepts are based on a set of statistical assumptions concerning the generation of the sample data, here the input output vector pairs. Embodiments that incorporate such a statistical concept are various forms of regression analysis. Iterative concepts start at an initial value and use the previous value at calculating the next one. In this way, the solution for a problem is approximated, where each iteration can lead to an improved approximation. In this way, the model generated by the matching unit can approximate the link between input output vector pairs. An example for an iterative concept is Newton's method. At recursive concepts, the solution of a matching problem is divided in several smaller matching problems, which can be solved more easily. This approach is particularly useful at input output vector pairs, where some input quantities have no or a limited impact on some output quantities. In this case, the input quantities and the corresponding output quantities can be separated and smaller problems can be solved. This approach can also be used, if some input quantities have a direct impact on some output quantities, but just an indirect impact to other output quantities. This might be the case, if the input quantities are used to calculate first output quantities and the first output quantities are used to calculate second output quantities. Then the input quantities have a direct impact on the first output quantities, but just an indirect impact on the second output quantities. At an optimisation concept, a most suitable solution from all feasible solutions is determined. It is apparent that the aforementioned concepts can also be combined with each other. E.g. an optimisation concept might use a statistical and/or an iterative concept. Smaller problems resulting from a recursive concept can be solved by a statistical and/or an optimisation concept.

According to one embodiment, the matching unit is adapted to vary parameters of the parametrised subset of building blocks so that results determined by the parametrised subset of building blocks matches to the received input output vectors with least variation. In this way, a suitable solution can be "guessed". In many cases, such a matching unit can be based on statistical concepts. This approach can be particularly useful, if the knowledge on the starting computation system is well founded, e.g. by knowledge of a limited amount of most likely used formulas (e.g. 10, 50 or 100 formulas).

According to one embodiment, the matching unit uses a multiple linear regression scheme for determining at least part of the parametrised subset of building blocks, preferably by minimizing an error function between received input output vectors and results determined by the parametrised subset of building blocks. Multiple linear regression is based on a statistical model which estimates a linear relationship between input and output quantities. The error function describes the difference between provided output quantities and the results calculated by the statistical model. This approach can allow for quick and precise matching of the parametrised subset of building blocks to provided input output vector pairs.

For further clarification, the following example is provided. Assuming that $n > k$ observations (i.e. input output vector pairs) are available, $y_i$ denotes the $i$-th observed response (i.e. output quantity) and $x_{ij}$ denotes the $i$-th observation of regressor $x_j$ (i.e. input quantity), a sample regression model may be as follows:

$$y_i = \beta_0 + \beta_1 x_{i1} + \beta_2 x_{i2} + \cdots + \beta_k x_{ik} + \varepsilon_i = \beta_0 + \sum_{j=1}^{k} \beta_j x_{ij} + \varepsilon_i$$

In matrix notation the regression model is:

$$y = X\beta + \varepsilon$$

where:

$$y = \begin{bmatrix} y_1 \\ y_2 \\ \vdots \\ y_n \end{bmatrix}, \; X = \begin{bmatrix} 1 & x_{11} & x_{12} & \dots & x_{1k} \\ 1 & x_{21} & x_{22} & \dots & x_{2k} \\ \vdots & \vdots & \vdots & \dots & \vdots \\ \vdots & \vdots & \vdots & \dots & \vdots \\ 1 & x_{n1} & x_{n2} & \dots & x_{nk} \end{bmatrix}, \; \beta = \begin{bmatrix} \beta_0 \\ \beta_1 \\ \vdots \\ \beta_k \end{bmatrix}, \; \varepsilon = \begin{bmatrix} \varepsilon_1 \\ \varepsilon_2 \\ \vdots \\ \varepsilon_n \end{bmatrix}$$

One way of solving this regression model is based on the least-squares function (i.e. an error function as mentioned before):

$$S(\beta_0, \beta_1, \dots, \beta_k) = \sum_{i=1}^{n} \varepsilon_i^2 = \sum_{i=1}^{n} \left( y_i - \beta_0 - \sum_{j=1}^{k} \beta_j x_{ij} \right)^2$$

This least-squared function must be minimised with respect to $\beta_0, \beta_1, \dots, \beta_k$. This is done by the usual procedure (setting gradients equal to zero). This leads to the least-squares normal equations. The solutions to the normal equations are the least-squares estimators $\hat{\beta}_0, \hat{\beta}_1, \dots, \hat{\beta}_k$. In this way, the parameters $\beta_0, \beta_1, \dots, \beta_k$ can be approximated.

According to one embodiment, the multiple linear regression scheme is based on at least some of the multiple building blocks stored in the building block storage. With the above example, the building blocks might be formed by the single sample regression models for $y_i$ or by the regression model in matrix notation. However, a building block might be much more granular, e.g. single summands $\beta_j x_{ij}$, constants $\beta_0$, etc.

According to one embodiment, the matching unit uses a symbolic regression scheme for determining at least part of the parametrised subset of building blocks that preferably best fits the received input output vector pairs. This matching scheme is quite powerful, as it does not need a model or other a priori knowledge of the system. Symbolic regression searches the space of mathematical expressions to find a model that best fits a given data set (the provided input output vector pairs). This approach can be very useful, when the knowledge about the starting computation system (or parts of it) is very limited. Using symbolic regression can result in very elementary building blocks, e.g. "+", "-", "*", "sin", variables, numbers, etc. The parameters of the parametrised subset of building blocks describe the link between the building blocks, coefficients, summands, etc.

According to one embodiment, the matching unit is based on genetic programming and successively and iteratively tries to find a parametrised subset of building blocks that matches the received input output vectors with a predefined margin. This approach is even more powerful than the symbolic regression. During operation, several programs (models) are generated by varying one or several elements of a previous program or a new program. A fitness level is calculated for each modified program. The better the fitness level the more suitable the model to match the provided data set. In summary, genetic programming tries to find a fittest model by evolution. The fittest model fits best to a provided data set (input output vector pairs) and has a suitable fitness level.

According to one embodiment, building blocks and/or linear regression are/is injected into the genetic programming to boost evolution of a branch. By injecting knowledge into the genetic programming, the quality of the matching can be improved and the matching time can be reduced. Injecting building blocks can be used, if it is very likely that a certain concept is used. E.g. when the starting computation system describes the behaviour of a complex electric circuit, it is known that the sum of electric currents entering a point has to be the same like the sum of electric currents leaving that point. When the starting computation system models the behaviour of an internal combustion engine, the laws of thermodynamics must be met. This also means that a starting computation system modelling their behaviour must meet those rules. As this is known, it is not necessary to let the genetic programming find these links on its own. Even though these few examples are anything but complete or can be considered as being limiting, they show how evolution of genetic programming can be boosted. By injecting linear regression (including multiple linear regression), genetic programming can for instance find sub-problems that can be solved by linear regression.

According to one embodiment, the matching unit is configured to combine different matching schemes and to successively determine the parametrised subset of building blocks. Combining different matching schemes results in an even better matching scheme. As many matching problems can be divided into sub-problems, different schemes can be used for different sub-problems. In one embodiment, one or several sub-problems are solved by a multiple linear regression. One, several or all of the remaining sub-problems can be taggled by symbolic regression and/or genetic programming and/or similar matching schemes. This short, but not complete or limiting list shows how powerful the present disclosure is.

According to one embodiment, the system additionally comprises a subset storage, communicatively coupled with the matching unit and configured to store the parametrised subset of building blocks generated by the matching unit. In this way, the result of the matching can be made accessible for better understanding the operation of the starting computation system.

Further features, properties, aims, effects and advantages of the present invention are illustrated in the following figures which show embodiments of the present disclosure. It is shown in

Fig. 1     a schematic representation of a migration of a starting computation system into a target computation system,

Fig. 2     a schematic representation of parts of an embodiment of a system according to the present disclosure and

Fig. 3     a diagram with steps of an embodiment of a method according to the present disclosure.

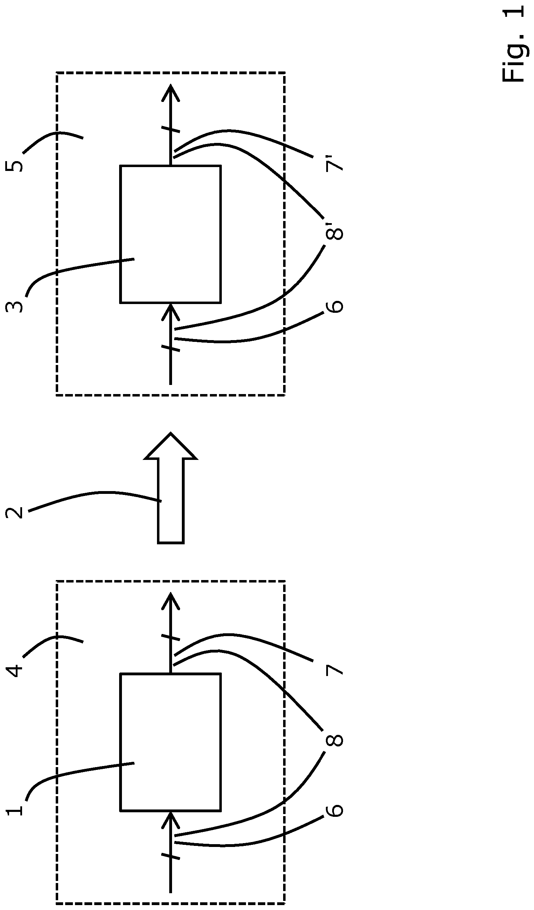

Fig. 1 shows a schematic representation of a starting computation system 1, the migration process 2 and the target computation system 3. The starting computation system 1 is running on a legacy computer system 4, the target computation system 3 will run on a new computer system 5. The starting computation system 1 is adapted to the legacy computer system 4, the target computation system 3 will be adapted to the new computer system 5. The legacy computer system 4 might be a computer system with outdated software and/or outdated hardware. It can be assumed that the starting computation system 1 is as extensive that a manual migration takes quite some time. An extensive starting computation system 1 might comprise a couple of hundred thousand, a million or even more lines of source code. The source code of the starting computation system 1 can be available. However, this is not required for the migration disclosed here.

When an input vector 6 is input to the starting computation system 1, the starting computation system 1 generates and outputs an output vector 7 based on the provided input vector 6. The input vector 6 comprises several or multiple input quantities, the output vector 7 comprises several or multiple output quantities, indicated by the short line crossing the arrows in Fig. 1, respectively. The input vector 6 and the corresponding output vector 7 forms an input output vector pair 8. A plurality of input output vector pairs 8 represents the behaviour of the starting computation system 1.

After migration, the target computation system 3 replicates the behaviour of the starting computation system 1. This means that the target computation system 3 will output an output vector 7', when the input vector 6 is input to the target computation system 3. Input vector 6 and output vector 7' forms an input output vector pair 8'. The output vector 7' should be identical or at least similar to the output vector 7 generated by the starting computation system 1 in reaction on the same input vector 6. "Similar" means that the output quantities of output vector 7' deviates from the output quantities of the output vector 7 by less than a predefined margin, e.g. less than 10%, less than 5%, less than 1% or less than 0.1%, just to provide some possible examples of predefined margins.

The input output vector pairs 8 are used for migrating the starting computation system 1 to the target computation system 2. It is assumed that a plurality of input output vector pairs 8 exists, e.g. from earlier operation of the starting computation system 1, or that the starting computation system 1 is still operatable for generating new input output vector pairs 8.

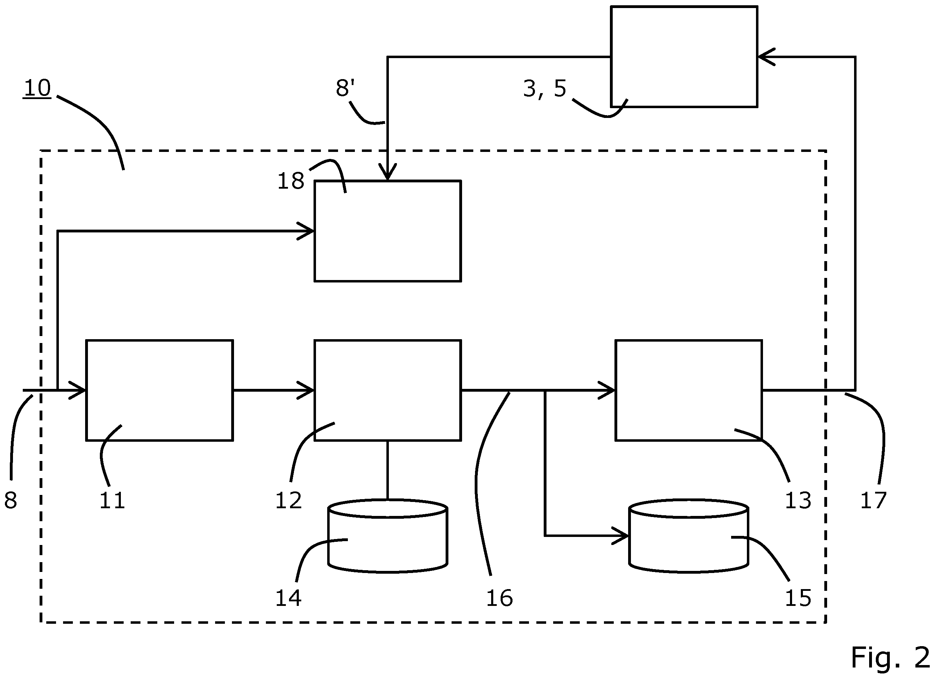

Fig. 2 shows a schematic representation with parts of a system 10 that might be used to perform essential steps of the migration process 3. System 10 is an embodiment of the system according to the present disclosure. System 10 comprises an input output vector interface 11, a matching unit 12, an implementation unit 13, a building block storage 14 and a subset storage 15.

The input output vector interface 11 is configured to receive a plurality of input output vector pairs 8. It might store the received input output vector pairs 8, reorganise them and/or pre-process them in another way. The input output vector pairs 8 (in original or pre-processed state) are then forwarded to the matching unit 12. The matching unit 12 accessed the building block storage 14 for loading at least some of the building blocks stored in the building block storage 14. Based on the received input output vector pairs 8 and the building blocks loaded from the building block storage 14, the matching unit 12 determines a parametrised subset of building blocks 16 and outputs it to the implementation unit 13 and the subset storage 15. The matching unit 12 might incorporate schemes as outlined in the general part of the description. When receiving a parametrised subset of building blocks 16, the implementation unit 13 implements the target computation system 3 so that it fulfils the requirements defined by the parametrise subset of building blocks 16. The thusly generated code 17 can be output by the migration system 10.

System 10 of Fig. 2 additionally comprises an evaluation unit 18 that can evaluate the target computation system 3 after migration. The code 17 can be loaded to the new computer system 5, where, based on input vectors 6, output vectors 7' are calculated. The respective input output vector pairs 8' can be input to the evaluation unit 18, which determines the deviation between the original input output vector pair 8 and the input output vector pair 8' generated by the newly migrated computation system 3.

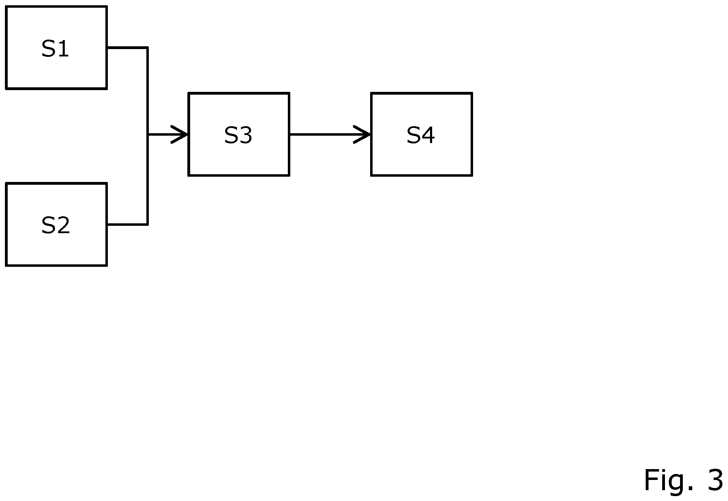

Fig. 3 shows a diagram with steps of an embodiment of a method according to present disclosure. This method can use the system according to Fig. 2. In step S1, a plurality of input output vectors 8 are received via an input output vector interface 11. In step S2, multiple building blocks are loaded from the building storage 14 and received by the matching unit 12. Each of the multiple building blocks describe at least part of a link between input and/or output quantities, wherein at least some of the building blocks are likely to be used at the starting computation system 1 when generating an output vector 7. In step S3, matching unit 12 determines a parametrised subset of building blocks 16 based on at least some of the received building blocks and the received input output vector pairs 8. This can be done by creating a parametrised subset of building blocks based on the at least some of the received building blocks and matching the developing parametrised subset with the received input output vector pairs 8. After determining a parametrised subset of building blocks 16, in step S4, the implementation unit 13 implements the target computation system 3 based on the determined parametrised subset of building blocks 16. The resulting code 17 (source code or machine code) can be output and loaded into new computer system 5 for executing the target computation system 3.

List of reference numbers

[0056]

1      Starting computation system
2      Migration process
3      Target computation system
4      Legacy computer system
5      New computer system
6      Input vector
7      Output vector
8      Input output vector pair

10      Migration system
11      Input output vector interface
12      Matching unit
13      Implementation unit
14      Building block storage
15      Subset storage
16      Parametrised subset of building blocks
17      Code of the target computation system
18      Evaluation unit

**Claims**

1.    System for migrating a starting computation system (1) to a target computation system (3), wherein, after migration (2), the target computation system (3) replicates a behaviour of the starting computation system (1), wherein the behaviour of the starting computation system (1) is represented by a plurality of input output vector pairs (8), each of the input output vector pairs (8) comprising an input vector (6) and an output vector (7) being generated by the starting computation system (1) in reaction to the input vector (6) of the same pair (8), comprising:

an input output vector interface (11), configured to receive a plurality of input output vector pairs (8),

a matching unit (12), communicatively coupled to the input output vector interface (11), thus being able to receive input output vector pairs (8) via the input output vector interface (11), wherein the matching unit (12) is configured to determine a parametrised subset of building blocks (16) by matching the parametrised subset of building blocks (16) with received plurality of input output vectors (8), and

an implementation unit (13), communicatively coupled with the matching unit (12) to receive the parametrised subset of building blocks (16), wherein the implementation unit (13) is configured to implement the target computation system (3) based on the parametrised subset of building blocks (16).

2. System according to claim 1, additionally comprising a building block storage (14) storing multiple building blocks and being communicatively coupled with the matching unit (12), wherein each of the multiple building blocks describe at least part of a link between input and/or output quantities, wherein at least some of the building blocks are likely to be used at the starting computation system (1) when generating an output vector (7), wherein the matching unit (12) is configured to access at least some of the multiple building blocks in the building block storage (14) and to determine the parametrised subset of building blocks (16) based on building blocks loaded from the building block storage (14).

3. System according to claim 2, **characterised in that** the multiple building blocks stored in the building block storage (14) are chosen from domain-specific knowledge for the starting computation system (1).

4. System according to any one of claims 1 to 3, **characterised in that** the matching unit (12) incorporates a machine learning scheme, wherein the parametrised subset of building blocks (16) forms a system to be trained and the matching unit (12) is configured to add a building block to the parametrised subset of building blocks (16) and/or adapt a building block, if it is likely to match with the received input output vectors (8), thus generating the parametrised subset of building blocks (16).

5. System according to any one of claims 1 to 4, **characterised in that** the matching unit (12) is based on statistical and/or iterative and/or recursive and/or optimisation concepts.

6. System according to any one of claims 1 to 5, **characterised in that** the matching unit (12) is adapted to vary parameters of the parametrised subset of building blocks so that results determined by the parametrised subset of building blocks matches to the received input output vectors (8) with least variation.

7. System according to any one of claims 1 to 6, **characterised in that** the matching unit (12) uses a multiple linear regression scheme for determining at least part of the parametrised subset of building blocks (16), preferably by minimizing an error function between the received input output vectors and results determined by the parametrised subset of building blocks (16).

8. System according to any one of claims 1 to 7, **characterised in that** the matching unit (12) uses a symbolic regression scheme for determining at least part of the parametrised subset of building blocks (16) that preferably best fits the received input output vector pairs.

9. System according to any one of claims 1 to 8, **characterised in that** the matching unit (12) is based on genetic programming and successively and iteratively tries to find a parametrised subset of building blocks (16) that matches the received input output vectors (8) with a predefined margin.

10. System according to claims 2 and 9 and/or 7 and 9, wherein building blocks stored in the building block storage (14) and/or linear regression are/is injected into the genetic programming to boost evolution of a branch.

11. System according to any one of claims 1 to 10, **characterised in that** the matching unit (12) is configured to combine different matching schemes and to successively determine the parametrised subset of building blocks (16).

12. System according to any one of claims 1 to 11, additionally comprising a subset storage, communicatively coupled with the matching unit (12) and configured to store the parametrised subset of building blocks generated by the matching unit (12).

13. Method for migrating a starting computation system (1) to a target computation system (3), preferably using a system according to any one of claims 1 to 12, wherein, after migration (2), the target computation system (3) replicates a behaviour of the starting computation system (1), wherein the behaviour of the starting computation system (1) is represented by plurality of input output vector pairs (8), each of the input output vector pairs (8) comprising an input vector (6) and an output vector (7) being generated by the starting computation system (1) in reaction to the input vector (6) of the same pair (8), comprising:

receiving (S1), via an input output vector interface (11), a plurality of input output vector pairs (8),
determining (S3), by a matching unit (12), a parametrised subset of building blocks (16) by matching the parametrised subset of building blocks (16) with received input output vector pairs (8), and
implementing (S4), by an implementation unit (13), the target computation system (3) based on the parametrised subset of building blocks (16).

14. Method according to claim 13, additionally comprising:
receiving (S2), from a building block storage (14), multiple building blocks, wherein each of the multiple building blocks describe at least part of a link between input and/or output quantities, wherein at least some of the building blocks are likely to be used at the starting computation system (1) when generating an output vector (7), and wherein determining (S3) the parametrised subset of building blocks (16) is based on at least some of the multiple building blocks stored in the building block storage (14).

15. Computer program product comprising instructions which, when the program is executed by a computer, cause the computer to carry out the method according to claim 13 or 14 and/or to run entities of a system according to any one of claims 1 to 12.

Fig. 1

Fig. 2

Fig. 3

Europäisches
Patentamt

European
Patent Office

Office européen
des brevets

# EUROPEAN SEARCH REPORT

**Application Number**

EP 24 21 6582

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/006853 A1 (KRISHNAMOORTHY MADHUSUDHANAN [IN] ET AL) 6 January 2022 (2022-01-06) * paragraph [0006] - paragraph [0065]; figures 1-3 * | 1-15 | INV. G06N3/126 G06N20/00 G06F9/48 G06F17/11 |
| Y | WO 2022/147190 A1 (NATURAL COMPUTATION LLC [US]) 7 July 2022 (2022-07-07) * paragraph [0012] - paragraph [0100]; figures 1-2 * | 1-15 | |
| A | US 2022/342697 A1 (MACFARLANE CRAIG [US] ET AL) 27 October 2022 (2022-10-27) * paragraph [0019] - paragraph [0070] * | 1-15 | |

TECHNICAL FIELDS
SEARCHED        (IPC)

G06N
G06F

The present search report has been drawn up for all claims

| Place of search | Date of completion of the search | Examiner |
|---|---|---|
| Munich | 20 February 2025 | Lindner, Anja |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 6582

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | Publication date | Patent family member(s) | Publication date |
|---|---|---|---|
| US 2022006853 A1 | 06-01-2022 | NONE | |
| WO 2022147190 A1 | 07-07-2022 | CA 3203102 A1 | 07-07-2022 |
| | | CN 116685988 A | 01-09-2023 |
| | | EP 4272133 A1 | 08-11-2023 |
| | | JP 2024502030 A | 17-01-2024 |
| | | KR 20230121892 A | 21-08-2023 |
| | | WO 2022147190 A1 | 07-07-2022 |
| US 2022342697 A1 | 27-10-2022 | EP 4327205 A1 | 28-02-2024 |
| | | US 2022342697 A1 | 27-10-2022 |
| | | US 2024045712 A1 | 08-02-2024 |
| | | WO 2022226400 A1 | 27-10-2022 |

EPO FORM P0459

For more details about this annex : see Official Journal of the European Patent Office, No. 12/82

**REFERENCES CITED IN THE DESCRIPTION**

**Patent documents cited in the description**

- EP 4283512 A1